# EUROPEAN PATENT APPLICATION

(11) **EP 3 378 839 A1**
(43) Date of publication of application: **26.09.2018**
(21) Application number: 17162594.0
(22) Date of filing: 23.03.2017
(51) Int. Cl.: C02F 1/72, C02F 1/78, B01F 3/04, B01F 5/06, B01F 15/02

(54) **A WATER TREATMENT SYSTEM AND A METHOD OF CLEANING CONTAMINATED WATER**

(71) Applicant: Dunea N.V., 2700 AT Zoetermeer (NL); Xylem IP Management S.à.r.l., 1259 Senningerberg (LU)
(72) Inventor: KNOL, Antonie, 2951 VN Alblasserdam (NL); VAN DEN BERG, Marc, 2235 DJ Valkenburg (NL); SCHEIDELER, Jens, 33758 Schloss Holte - Stukenbrock (DE)
(74) Representative: De Vries & Metman

(57) **Abstract**

A water treatment system (1) for cleaning contaminated water comprises a channel (2) through which water can flow. The channel (2) is provided with a mixing device (9) and a reaction zone (10) located downstream of the mixing device (9). The water can flow substantially undisturbedly through the reaction zone (10). An ozone injector (12) is located upstream of the mixing device (9) and a hydrogen peroxide injector (13) is located upstream of the ozone injector (12). The channel (2) has a vertically oriented channel portion (3) including a reactor pipe (5), an inlet pipe (4) located upstream of the reactor pipe (5) and an outlet pipe (6) located downstream of the reactor pipe (5) and above the inlet pipe (4). The reactor pipe (5) has a larger cross-sectional flow area than each of the inlet and outlet pipes (4, 6). The mixing device (9) and the reaction zone (10) are located within the reactor pipe (5), whereas the ozone injector (12) and hydrogen peroxide injector (13) are located upstream of the reactor pipe (5).

## Description

The present invention relates to a water treatment system.

Water treatment systems are well-known in the field of cleaning drinking water. Since contaminations by organic substances are increasingly being recognised as harmful to health, removal is necessary. One example of this is the increasing concentration of pharmaceutical residues in surface water. A known process of cleaning contaminated water is using oxidizing techniques. One example is the so-called "advanced oxidation process" (AOP), wherein ozone (0₃) and hydrogen peroxide (H₂O₂) are introduced into water and react with each other to form the hydroxyl radical (OH⁻), which is a powerful oxidizing species. It is desirable to reduce the time required for ozone, hydrogen peroxide, and/or the hydroxyl radical to encounter contaminants present in the water, thereby maximizing oxidation.

A disadvantage of known AOP decontamination systems is formation of unwanted by-products. For example, bromide ions (Br-), naturally present in the water, can undergo a series of reactions to produce bromate (BrO₃⁻). It is important to prevent or minimize bromate formation during decontamination of potable water, since bromate is a suspected carcinogen.

WO 99/07642 is related to a method of treating contaminated water in which ozone and hydrogen peroxide are fed directly into the main water flow and both substances are then simultaneously dissolved and distributed in the water by means of a mixing device.

An object of the invention is to provide a water treatment system for optimizing contact between the oxidizer(s) and the contaminants in the water whereas minimizing the size of the water treatment system.

This object is accomplished with the water treatment system according to claim 1.

The present invention appears to provide a relatively compact system in which oxidation of organic components occur at high efficiency and effectivity while the formation of bromate is minimal.

The reaction zone is located directly downstream of the mixing device and an additional mixing device downstream of the reaction zone is not necessary. Preferably the ozone and hydrogen peroxide are injected in-line, i.e. in the main flow of contaminated water.

In a specific embodiment the mixing device is a first mixing device and the inlet pipe and the reactor pipe are connected through a conical piece containing a second mixing device. The conical piece minimizes flow losses at the transition between the inlet pipe and the reaction pipe, whereas injected ozone in the water is distributed uniformly upon entering the first mixing device.

The first and second mixing devices can be located at a distance from each other such that under operating conditions water can flow undisturbedly between the first and second mixing device. The distance between the first and second mixing device may be small, for example smaller than the length of the first or second mixing device in flow direction of the water through the channel.

The second mixing device may partly extend in the inlet pipe.

A third mixing device may be located between the ozone injector and the hydrogen peroxide injector. This means that hydrogen peroxide is already mixed in the contaminated water before arriving at the ozone injector.

The invention is also related to a method of treating contaminated water by using a water treatment system as described hereinbefore, wherein water flows through the channel and gaseous ozone is injected into the water via the ozone injector, wherein the mixing device is, or if applicable: the first and second mixing devices are, adapted such that more than 90% of the ozone is dissolved in the water upon reaching the reaction zone.

Due to intensely mixing a great part of ozone is dissolved in the contaminated water. This appears to suppress the formation of bromate, which is a surprising effect, since the general opinion in the field of water treatment systems is that in systems in which ozone is (almost) completely dissolved in a single, highly effective mixer, more bromate is formed.

The invention will hereafter be elucidated with reference to a very schematic drawing showing an embodiment of the invention by way of example.

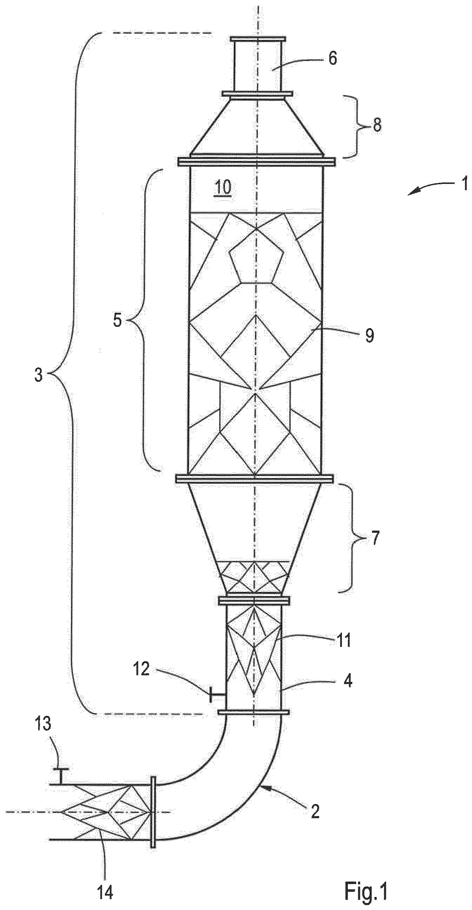

Fig. 1 is a cross-sectional view of an embodiment of a water treatment system according to the invention.

Fig. 1 shows an embodiment of a water treatment system 1 for cleaning contaminated water according to the invention. The water treatment system 1 comprises a channel 2 through which water can flow in upward direction. The channel 2 has a vertically oriented channel portion 3 which comprises an inlet pipe 4, a reactor pipe 5 and an outlet pipe 6. The inlet pipe 4 is located upstream of the reactor pipe 5 and the outlet pipe 6 is located downstream of the reactor pipe 5. The reactor pipe 5 has a larger cross-sectional flow area than each of the inlet and outlet pipes 4, 6.

In the embodiment as shown in Fig. 1 the inlet pipe 4 and the reactor pipe 5 are connected to each other through an inlet conical piece 7. The outlet pipe 6 and the reactor pipe 5 are connected to each other through an outlet conical piece 8.

The reactor pipe 5 contains a first mixing device 9 and a reaction zone 10 through which the water can flow undisturbedly. The first mixing device 9 is a static mixer in this case, but an alternative mixing device is conceivable.

In the embodiment as shown in Fig. 1 the channel 2 comprises a second mixing device 11, which is partly incorporated in the inlet conical piece 7 and partly incorporated in the inlet pipe 4. The first and second mixing devices 9, 11 are located at a distance from each other such that under operating conditions water can flow undisturbedly between the first and second mixing devices 9, 11.

The channel 2 is provided with an ozone injector 12 which is located in the inlet pipe 4 and a hydrogen peroxide injector 13 which is located upstream of the ozone injector 12. The ozone and the hydrogen peroxide are gaseous when they are injected. The injectors 12, 13 are adapted such that small bubbles arise in the contaminated water. This has a positive effect on dissolving the gases in the water.

The hydrogen peroxide and ozone are injected directly into the entire contaminated water flow. This "in-line" injection of oxidizing agents eliminates the problems of uneven mixing and elevated local ozone concentrations associated with diversion of a side stream of contaminated water. "In-line" injection also eliminates the need for additional expensive and complex pumps and piping required for diversion and reintroduction of such a side stream of contaminated water.

A third mixing device 14 is located between the ozone injector 12 and the hydrogen peroxide injector 13. During and immediately after high intensity mixing in the first mixing device 9, ozone reacts with hydrogen peroxide rapidly to reduce the concentration of ozone present in the contaminated water flow. The system is adapted such that under operating conditions, in which the flowrate of contaminated water may range from 600 m³ to 1200 m³ per hour, more than 90% of the ozone is dissolved in the water upon reaching the reaction zone 10.

The second mixing device 11 is much smaller than the first mixing device 9. The second mixing device 11 is intended to create a uniform distribution of ozone within the water flow upon entry into the reactor pipe 5 rather than dissolving the gaseous ozone in the water. Nevertheless, ozone will also react with hydrogen peroxide in the second mixing device 11, the inlet conical piece 7 and the first mixing device 9. In an alternative embodiment the second mixing device 11 is omitted such that a real single mixing stage is obtained. The size of the system is such that under operating conditions, in which the flowrate of contaminated water may range from 600 m³ to 1200 m³ per hour, the residence time in the second mixing device 11 is 0.3-0.6 seconds and in the reaction zone 10 is 8-16 seconds.

The invention is not limited to the embodiment shown in the drawing and described hereinbefore, which may be varied in different manners within the scope of the claims and their technical equivalents.

## Claims

1. A water treatment system (1) for cleaning contaminated water, comprising a channel (2) through which water can flow, wherein the channel (2) is provided with a mixing device (9) and a reaction zone (10) located downstream of the mixing device (9), wherein the water can flow substantially undisturbedly through the reaction zone (10), an ozone injector (12) located upstream of the mixing device (9) and a hydrogen peroxide injector (13) located upstream of the ozone injector (12), wherein the channel (2) has a vertically oriented channel portion (3) including a reactor pipe (5), an inlet pipe (4) located upstream of the reactor pipe (5) and an outlet pipe (6) located downstream of the reactor pipe (5) and above the inlet pipe (4), wherein the reactor pipe (5) has a larger cross-sectional flow area than each of the inlet and outlet pipes (4, 6), wherein the mixing device (9) and the reaction zone (10) are located within the reactor pipe (5), whereas the ozone injector (12) and hydrogen peroxide injector (13) are located upstream of the reactor pipe (5).

2. A water treatment system (1) according to claim 1, wherein the mixing device is a first mixing device (9) and the inlet pipe (4) and the reactor pipe (5) are connected through a conical piece (7) containing a second mixing device (11).

3. A water treatment system (1) according to claim 2, wherein the first and second mixing devices (9, 11) are located at a distance from each other such that under operating conditions water can flow undisturbedly between the first and second mixing device (9, 11).

4. A water treatment system (1) according to claim 2 or 3, wherein the second mixing device (11) partly extends in the inlet pipe (4).

5. A water treatment system (1) according to one of the preceding claims, wherein a third mixing device (14) is located between the ozone injector (12) and the hydrogen peroxide injector (13).

6. A method of treating contaminated water by using a water treatment system (1) according to one of the preceding claims, wherein water flows through the channel (2) and gaseous ozone is injected into the water via the ozone injector (12), wherein the mixing device (9) is, or if applicable the first and second mixing devices (9, 11) are, adapted such that more than 90% of the ozone is dissolved in the water upon reaching the reaction zone (10).
